(19) Europäisches Patentamt
European Patent Office
Office européen des brevets

(11) EP 0 588 691 B1

(12) **FASCICULE DE BREVET EUROPEEN**

(45) Date de publication et mention de la délivrance du brevet: **14.05.1997 Bulletin 1997/20**

(51) Int. Cl.[6]: **B01J 23/10**, B01J 23/76, C01F 17/00

(21) Numéro de dépôt: **93402180.9**

(22) Date de dépôt: **08.09.1993**

(54) **Composition à base d'oxyde cérique, préparation et utilisation**

Zer-oxydenthaltende Zusammensetzung, ihre Herstellung und ihre Verwendung

Ceric oxide containing composition, its preparation and its use

(84) Etats contractants désignés:
**AT BE CH DE DK ES FR GB GR IE IT LI LU NL PT SE**

(30) Priorité: **15.09.1992 FR 9210953**

(43) Date de publication de la demande:
**23.03.1994 Bulletin 1994/12**

(73) Titulaire: **RHONE-POULENC CHIMIE**
**92408 Courbevoie Cédex (FR)**

(72) Inventeurs:
- **Bonneau, Lionel**
  **F-17540 Angliers (FR)**
- **Pijolat, Michèle**
  **F-42350 La Talaudiere (FR)**
- **Touret, Olivier**
  **F-93300 Aubervilliers (FR)**

(74) Mandataire: **Dubruc, Philippe et al**
**RHONE-POULENC CHIMIE,**
**Direction de la Propriété Industrielle,**
**25, Quai Paul Doumer**
**92408 Courbevoie Cédex (FR)**

(56) Documents cités:
**EP-A- 0 205 102**
**EP-A- 0 207 857**
**EP-A- 0 396 159**
**EP-A- 0 460 730**
**FR-A- 2 571 981**
**US-A- 3 951 867**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Rank Xerox (UK) Business Services
2.14.3/3.4

## Description

La présente invention concerne une nouvelle composition à base d'oxyde cérique. Elle concerne plus particulièrement une composition à base d'oxyde cérique présentant une capacité de stockage de l'oxygène améliorée.

Elle concerne également un procédé pour l'obtention d'une telle composition, ainsi que l'utilisation de cette dernière, notamment dans le domaine de la catalyse.

On sait que l'oxyde de cérium possède la propriété remarquable de changer rapidement d'état d'oxydation en fonction de l'atmosphère dans laquelle il se trouve, ce qui confère à ce produit un important pouvoir tampon vis-à-vis de l'oxygène. Ainsi, l'oxyde de cérium peut capter de l'oxygène en conditions oxydantes et le relarguer en conditions réductrices, et ceci selon le mécanisme réversible et équilibré suivant :

$$CeO_2 \underset{\text{conditions oxydantes}}{\overset{\text{conditions réductrices}}{\rightleftharpoons}} CeO_{2-x} + x/_2\, O_2$$

Cette propriété particulièrement intéressante de l'oxyde de cérium fait aujourd'hui de ce produit l'un des constituants essentiels des catalyseurs dits multifonctionnels, notamment ceux destinés au traitement des gaz d'échappement des moteurs à combustion interne. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). De tels catalyseurs, tant au niveau de leurs compositions que de leur principe de fonctionnement, ont déja été largement décrits dans la littérature et ont fait l'objet de nombreux brevets et/ou demandes de brevets. Compte tenu du fait que l'effet tampon de l'oxyde de cérium (propriété que l'on identifie également couramment sous le terme de capacité de stockage de l'oxygène) favorise la réalisation et le contrôle des diverses conditions qui sont à respecter, notamment au niveau des teneurs et de la diffusion en oxygène, pour conduire correctement chacune des réactions d'oxydation et de réduction mentionnées ci-dessus, les catyseurs contenant de l'oxyde cérium se sont avérés globalement plus efficaces que ceux qui en sont exempts.

On connait par FR-A-2571981 des compositions à base de cérium et, à titre d'additif, de fer ou de nickel. Ces compositions ne sont pas des solutions solides d'oxydes de ces additifs dans de l'oxyde de cérium et elles ne sont pas utilisées au traitement des gaz d'échappement.

Le document US 3951867 décrit une composition à base d'oxyde de cérium dont la surface est stabilisée par addition d'étain. Les compositions ne se présentent pas sous forme d'une solution solide.

EP-A-460730 concerne essentiellement des revêtements pour la préparation de catalyseurs de postcombustion automobile, à base d'alumine et d'oxyde de cérium, cet oxyde comprenant comme additif du cuivre, de l'étain ou du chrome. Ce document ne décrit pas de compositions à base d'oxyde de cérium et d'un additif sous forme de solutions solides dont les propriétés de stockage d'oxygène seraient améliorées.

Or, considérant les normes anti-pollution de plus en plus sévères qui s'imposent aujourd'hui dans la plupart des pays en vue de réduire les émissions gazeuses jugées nocives pour l'environnement, et ceci en particulier dans le domaine de la post-combustion automobile, il se manifeste actuellement un fort besoin dans l'état de la technique quant à pouvoir disposer d'oxydes cériques présentant des performances en capacité de stockage de l'oxygène plus élevées.

La présente invention vise à la satisfaction d'un tel besoin.

A la suite d'importantes recherches menées sur la question, la Demanderesse a trouvé qu'il étaient possible d'obtenir des oxydes cériques présentant une capacité de stockage de l'oxygène améliorée, et donc particulièrement utiles dans le domaine de la catalyse, en combinant l'oxyde cérique avec certains additifs spécifiques.

Plus précisément encore, il est maintenant proposé une nouvelle composition à base d'oxyde cérique à capacité de stockage d'oxygène améliorée, ladite composition étant caractérisée par le fait qu'elle contient de l'oxyde cérique et, à titre d'additif, un oxyde de bismuth, le bismuth étant présent en une quantité efficace pour obtenir une amélioration de la capacité de stockage d'oxygène.

Selon un autre mode de réalisation, la composition de l'invention est caractérisée par le fait qu'elle contient de l'oxyde cérique et, à titre d'additif, au moins un oxyde d'un autre élément métallique M choisi dans le groupe constitué par le fer, le nickel, l'étain et le chrome ou un de leurs mélanges, l'oxyde de l'élément M formant avec l'oxyde cérique une solution solide et étant présent en une quantité efficace pour obtenir une amélioration de la capacité de stockage d'oxygène.

Dans l'exposé qui suit de la présente invention, on entend par surface spécifique, la surface spécifique B.E.T. déterminée par adsorption d'azote conformément à la norme ASTM D 3663-78 établie à partir de la méthode BRUNAUER -

EMMETT - TELLER décrite dans le périodique "The Journal of the American Society, 60, 309 (1938)".
Par ailleurs, on utilise indifféremment dans cette description les termes "compositions à base d'oxyde cérique", ou plus simplement encore "oxyde cérique", "contenant", "promu par", "dopé par" ou "additivé par" un élément M, pour définir et désigner le même produit objet de la présente invention.
L'amélioration de la capacité de stockage d'oxygène des compositions selon l'invention a été, quant à elle, mise en évidence selon le test tel que donné aux exemples ci-après.
Conformément à l'invention, la promotion de la capacité de stockage de l'oxygène de l'oxyde cérique est donc assurée par un élément métallique M tel que ci-dessus défini, cet élément étant sous forme oxyde.
Selon une caractéristique préférée des compositions selon l'invention, l'élément dopant M est choisi, seul ou en mélange, parmi le fer, le bismuth et le nickel.
Les compositions dopées à la fois par du fer et du nickel s'étant révélées comme donnant les meilleurs résultats, elles constituent ici la forme de réalisation la plus avantageuse de la présente invention.

La présence de l'élément dopant au sein des compositions selon l'invention peut être mise en évidence par de simples analyses chimiques, alors que les analyses classiques en diffraction X indiquent la forme sous laquelle cette présence existe.

On notera que l'oxyde de l'élément métallique M peut ainsi être présent sous différentes formes dans les compositions.

Toutefois, selon un mode particulièrement préféré de réalisation des compositions de l'invention, le ou les éléments dopants M sont introduits de manière telle que leurs oxydes forment avec l'oxyde de cérium, en surface ou à coeur de ces derniers, des combinaisons de type essentiellement solutions solides ou oxydes mixtes. Dans ce cas, l'élément dopant est alors lié de façon irréversible à l'oxyde cérique, en ce sens que, par exemple, des traitements physiques simples, comme notamment des lavages, même très poussés, ne permettent pas de l'éliminer. En outre, toujours dans ce cas, les spectres en diffraction X de ces compositions ne révèlent, au sein de ces dernières, l'existence que d'une seule phase clairement identifiable, et qui correspond en fait à celle d'un oxyde cérique dont les paramètres de maille peuvent ou non être plus ou moins décalés par rapport à un oxyde cérique pur.

Les quantités d'élément dopant à mettre en oeuvre pour obtenir l'effet de promotion désiré dans les compositions selon l'invention peuvent varier dans de larges limites, lesquelles dépendent à la fois de l'ampleur de l'amélioration recherchée au niveau de la capacité de stockage de l'oxygène mais également de la forme sous laquelle pourra matériellement se trouver l'oxyde de cet élément lorsqu'il est combiné avec de l'oxyde de cérium (limite de solubilité notamment).
En général, et quelque soit la composition étudiée, on note que des quantités très faibles d'éléments dopants suffisent à augmenter déja de manière substantielle la capacité de stockage d'oxygène de l'oxyde cérique, et que l'effet de promotion n'est plus significativement amélioré à partir d'une quantité limite (effet de seuil) au delà de laquelle un dopage plus poussé devient en soi sans aucun intérêt.
Dans la pratique, les compositions selon l'invention contiennent ainsi, outre l'oxyde cérique, un oxyde du ou des élément métalliques M précités en une quantité pouvant représenter de 1 à 50% atomique d'atomes de métal M par rapport aux atomes de cérium, et plus particulièrement de 1 à 20% atomique. De préférence, cette quantité est choisie entre 1 et 10% atomique, et encore plus avantageusement entre 1 et 5% atomique.

Les compositions selon l'invention présentent enfin une surface spécifique d'au moins 10 $m^2/g$, de préférence supérieure à 80 $m^2/g$ et plus avantageusement encore comprise entre 80 et 300 $m^2/g$. En particulier, cette surface spécifique est toujours d'au moins 10 $m^2/g$ après une calcination opérée à 800°C.

Le procédé de synthèse des nouvelles compositions à base d'oxyde cérique selon l'invention va maintenant être développé. Ce procédé constitue un second objet de la présente invention.

Le procédé selon l'invention consiste, dans ses étapes essentielles, à tout d'abord préparer un mélange intime entre (i) un oxyde cérique ou un hydroxyde cérique, et (ii) au moins un additif constitué par un hydroxyde ou un sel, décomposable thermiquement en oxyde, du ou des métaux promoteurs M précités, ledit mélange étant effectué dans les proportions stoechiométriques requises, puis à calciner ce mélange de manière à obtenir une composition à base d'oxydes conforme à l'invention.

On notera d'ores et déja que, dans le procédé ci-dessus, l'utilisation d'un oxyde cérique convient au cas où les compositions selon l'invention sont préparées à partir d'un oxyde cérique déja lui-même synthétisé, la méthode d'obtention du mélange intime reposant alors sur une imprégnation dudit oxyde par un sel précurseur d'oxyde à la calcination. En outre, et comme cela sera expliqué plus en détails par la suite, la voie hydroxyde cérique est, quant à elle, réservée au cas particulier où l'on désire préparer ces compositions selon une technique parfaitement intégrée à un procédé déja éxistant d'élaboration d'oxyde cérique et qui repose sur la calcination d'un hydroxyde précurseur; dans ce cas, le mélange intime entre l'hydroxyde cérique et le sel ou l'hydroxyde de l'élément dopant peut être obtenu soit par un simple ajout dudit sel dans l'une des étapes de la préparation dudit hydroxyde cérique, soit selon la technique dite de co-précipitation des hydroxydes.

Le premier mode de réalisation évoqué ci-dessus (imprégnation) pour la préparation des compositions selon l'invention passe donc sur l'utilisation d'un oxyde cérique.

Les oxydes cériques utilisables dans l'invention sont des produits déja bien connus en soi et ils ont été largement décrits dans la littérature, notamment dans de nombreux brevets ou demandes de brevet. Ils sont également disponibles dans le commerce.

Ils peuvent être préparés notamment par chauffage à l'air entre 400 et 1000°C d'un hydroxyde cérique ou de certains sels oxygénés tels que nitrates, sulfates, carbonates, oxalates ou acétates (cf. Paul PASCAL, "Nouveau Traité de Chimie Minérale", Tome VII, p. 777, (1959)), l'hydroxyde cérique pouvant se trouver sous forme de précipités ou de suspensions colloïdales.

Les oxydes cériques mis en oeuvre présentent une surface spécifique d'au moins 10 $m^2/g$, de préférence supérieure à 80 $m^2/g$ et plus avantageusement encore comprise entre 80 et 300 $m^2/g$.

Il peut être avantageux dans certaines applications de les mettre en forme en effectuant une agglomération des particules les constituant selon des techniques bien connues d'extrusion, ou de pastillage par pression, par exemple.

Comme indiqué ci-avant, on effectue ensuite un mélange par imprégnation de l'oxyde cérique à l'aide d'une solution d'au moins un sel soluble des métaux M précités, sel qui doit être décomposable thermiquement en oxyde et que l'on dénommera de manière simplifiée précurseur d'oxyde.

A titre de précurseurs d'oxydes convenables de ces métaux M, on peut citer les nitrates, les chlorures, les sulfates, les acétates par exemple. Les nitrates constituent les précurseurs préférés.

Selon une variante préférée de ce premier mode de réalisation du procédé selon l'invention, l'imprégnation est réalisée "à sec", c'est à dire que le volume total de solution utilisée est approximativement égal au volume poreux total développé par l'oxyde cérique. Concernant la détermination de ce volume poreux, elle peut être réalisée selon la méthode connue au porosimètre à mercure ou bien par mesure de la quantité d'eau absorbée par un échantillon.

Il est toutefois également possible d'imprégner le support par trempage de celui-ci dans la solution du précurseur d'oxyde de l'élément M et d'éliminer l'excès de solution par égouttage.

Dans une deuxième étape, on sèche l'oxyde cérique imprégné pour éliminer l'eau, en laissant ainsi les précurseurs d'oxydes sous une forme dispersée de manière homogène et intime dans, ou à la surface de, l'oxyde cérique.

Le séchage est le plus souvent effectué à l'air, à une température qui peut varier entre 80 et 300°C et choisie de préférence entre 100 et 150°C. Le séchage est poursuivi jusqu'à l'obtention d'un poids constant. Généralement, la durée du séchage est comprise entre 1 et 24 heures.

Enfin, dans une troisième étape, on calcine l'oxyde cérique imprégné à une température comprise généralement entre 400 et 1200°C et de préférence entre 600 et 1000°C.

Cette température de calcination doit être suffisante pour transformer les précurseurs en oxydes, et elle est aussi choisie en fonction de la température d'utilisation ultérieure de l'oxyde cérique promu. La durée de la calcination peut quant à elle varier dans de larges limites, par exemple entre 1 et 24 heures, de préférence entre 4 et 10 heures.

A l'issue de cette calcination, on récupère un oxyde cérique combiné à un ou plusieurs des oxydes des éléments métalliques M précités, ledit oxyde cérique présentant alors une capacité de stockage de l'oxygène améliorée par rapport à l'oxyde cérique de départ.

Comme souligné précédemment dans la description, il est également possible de préparer les compositions selon l'invention par d'autres voies qui consistent à introduire l'élément métallique M, toujours sous la forme de son précurseur d'oxyde, au cours de l'élaboration même d'un oxyde cérique, cette élaboration devant néanmoins se limiter à celles du type impliquant la formation préalable d'un hydroxyde cérique puis la calcination de cet hydroxyde précurseur en oxyde cérique. L'additivation au cours de la synthèse même de l'oxyde cérique est préférée à la voie imprégnation, car elle permet une répartition plus homogène du cation dopant, et donc une meilleure incorporation dans la matrice $CeO_2$. Cette manière d'opérer constitue un second mode de réalisation du procédé de préparation selon l'invention. Bien entendu, le choix du moment et de l'étape au cours desquels l'introduction du précurseur d'oxyde de l'élément M peut être réalisée dépend d'une part de la nature de ce précurseur et d'autre part des conditions mêmes de fabrication de l'oxyde cérique. A cet égard, on notera que tout procédé connu en soi pour la synthèse d'un oxyde cérique par une voie hydroxyde, est, a priori, susceptible de convenir à la mise en oeuvre du procédé selon l'invention

Afin d'illustrer plus clairement les propos qui précèdent, diverses variantes tournant autour d'un mode particulièrement préféré de fabrication des compositions selon l'invention par une voie hydroxyde, vont maintenant être développées.

Conformément à ce mode préféré de fabrication, les compositions selon l'invention sont préparées selon un procédé caractérisé en ce que, d'une part, il comprend les étapes suivantes :

(i) on prépare une dispersion colloïdale d'un composé de cérium IV en faisant réagir une solution aqueuse d'un sel de cérium IV et une base de telle sorte que l'on obtienne un taux de neutralisation r supérieur strictement à 0 et inférieur strictement à 4

(ii) on soumet éventuellement ladite dispersion colloïdale à un traitement thermique (étape de thermohydrolyse)

(iii) on chauffe, éventuellement en présence d'une base décomposable, ladite dispersion dans une enceinte clôse jusqu'à une température et une pression inférieures respectivement à la température critique et à la pression critique du milieu (étape appelée également autoclavage)

(iv) on refroidit le milieu réactionnel et on le ramène à la pression atmosphérique

(v) on récupère le précipité d'hydroxyde cérique ainsi formé

(vi) puis on le calcine pour le transformer en oxyde cérique,

et en ce que, d'autre part, l'on ajoute à l'une quelconque des étapes (i) à (v) ci-dessus au moins un sel précurseur d'oxyde de l'élément métallique M.

Le procédé ci-dessus permet, entre autres avantages, d'obtenir des compositions selon l'invention présentant de grandes surface spécifiques, et ceci même après des températures de calcination très élevées.

Par dispersion colloïdale d'un composé de cérium IV, on entend une dispersion colloidale d'un hydroxyde cérique ou oxyde cérique hydraté $CeO_2,2H_2O$ pouvant contenir des quantités résiduelles d'ions liés ou absorbés tels que par exemple nitrate, ammonium. Des exemples de telles dispersions colloïdales sont donnés dans les demandes de brevet européens EP-A- 0 206 906 et EP-A- 0 208 580.

Comme indiqué ci-dessus, on réalise la préparation de ladite dispersion colloïdale en faisant réagir une solution aqueuse d'un sel de cérium IV avec une base, et ceci dans les conditions définies plus en détails ci-après.

On met en oeuvre une quantité de base qui doit être inférieure à la quantité de base nécessaire à la neutralisation complète du cérium IV présent dans le milieu réactionnel pour obtenir $Ce(OH)_4$. Il en résulte que l'on obtient le cérium IV non pas sous la forme d'un précipité gélatineux, mais sous la forme de colloïdes, ce qui signifie qu'il y a présence de particules de dimensions colloïdales.
Selon les conditions de préparation de ladite dispersion, le cérium IV peut se trouver totalement sous la forme de colloïdes. Il est également possible que le cérium IV se trouve simultanément sous forme d'ions et sous forme de colloïdes. Pour simplifier l'exposé, on entend par "dispersion colloïdale" aussi bien une dispersion purement colloïdale qu'un mélange ions-colloïdes : ceux-ci seront mieux explicités ultérieurement.

A titre de solutions de sels de cérium IV, on peut faire appel notamment à une solution aqueuse de nitrate cérique ou une solution aqueuse de nitrate céri-ammoniacal. Ladite solution peut contenir sans inconvénient du cérium à l'état céreux mais il est souhaitable qu'elle contienne au moins 85 % de cérium IV.
La concentration de la solution de sel de cérium n'est pas un facteur critique et peut ainsi varier entre 0,1 et 2 moles/litres, de préférence entre 1 et 2 moles/litre : ladite concentration étant exprimée en cérium IV.
La solution aqueuse de sel de cérium IV présente généralement une certaine acidité initiale et peut ainsi avoir une normalité variant entre 0,1 et 4 N et, de préférence, entre 0,1 et 1 N.
La solution de nitrate cérique peut être obtenue par réaction de l'acide nitrique sur un oxyde cérique hydraté préparé d'une manière classique par réaction d'une solution d'un sel céreux, par exemple le carbonate céreux, et d'une solution d'ammoniaque en présence d'eau oxygénée.
De préférence, on utilise la solution de nitrate cérique obtenue selon le procédé d'oxydation électrolytique d'une solution de nitrate céreux tel que décrit dans la demande de brevet française FR-A- 2 570 087, qui constitue ici une matière première de choix.

Pour ce qui est de la base mise en oeuvre, on peut faire appel à une solution aqueuse d'ammoniaque, d'hydroxyde de sodium ou de potassium. On peut également faire appel à l'ammoniac gazeux. On met en oeuvre, de préférence, une solution d'ammoniaque.
La normalité de la solution basique n'est pas un facteur critique et peut varier entre 0,1 N et 11 N, de préférence entre 0,1 N et 5 N.

La proportion entre la solution basique et la solution de sel de cérium IV doit être telle que le taux de neutralisation est supérieur à 0 et inférieur à 4, ces deux bornes étant exclues.
On définit le taux de neutralisation r par l'équation suivante :

$$r = \frac{n3 - n2}{n1}$$

dans laquelle :

- n1 représente le nombre de moles de Ce IV présentes dans la dispersion colloidale finale
- n2 représente le nombre de moles $OH^-$ nécessaires pour neutraliser l'acidité apportée par la solution aqueuse initiale de sel de cérium IV
- n3 représente le nombre total de moles $OH^-$ apportées par l'addition de la base.

Le taux de neutralisation reflète l'état colloïdal du cérium IV :

- avec r = 4, le cérium IV précipite sous forme gélatineuse
- avec r = 0, le cérium IV est sous forme ionique
- avec 0 < r < 4, le cérium IV est sous forme plus ou moins ionique et/ou colloïdale.

Lorsque le taux de neutralisation est élevé, c'est à dire supérieur ou égal à 3 environ, le cérium IV dans la dispersion colloïdale obtenue est essentiellement sous la forme de colloïdes. Lorsque ce taux est inférieur à 3 environ, le taux de cérium IV sous forme colloïdale est compris généralement entre 10 et 90 % du cérium IV mis en oeuvre.

La réaction entre la solution aqueuse de sel de cérium IV et la base mise en oeuvre dans les quantités précédemment définies, est effectuée à une température qui peut se situer entre 0°C et 60°C mais, de préférence, à la température ambiante, soit le plus souvent entre 15 et 25°C.

On peut réaliser le mélange des réactifs précités selon plusieurs variantes. Par exemple, on peut faire le mélange simultané, sous agitation de la solution aqueuse de sel de cérium IV et de la solution basique ou bien additionner en continu ou en une seule fois, la base dans la solution aqueuse de sel de cérium IV ou inversement.

La durée du mélange peut varier entre 0,1 seconde et 30 heures et est choisie de préférence entre 2 heures et 6 heures.

Quelque soit l'ordre d'introduction des réactifs, on obtient une dispersion colloïdale d'un composé de cérium IV, en milieu aqueux, qui peut alors être mise en oeuvre dans la suite du procédé selon l'invention. Cette dispersion présente une concentration en cérium IV, exprimée en $CeO_2$, qui peut varier entre 0,1 et 2 moles/litre, de préférence de 0,1 à 1 mole/litre.

Le diamètre hydrodynamique moyen des colloïdes, qui est déterminé par diffusion quasi-élastique de la lumière selon la méthode décrite par Michael L. Mc CONNELL dans "Analytical Chemistry 53, n° 8, 1007 A (1981)", peut varier entre 4 nm et 40 nm.

Dans une deuxième étape du procédé selon l'invention (étape (ii)), qui n'est pas obligatoire mais simplement préférée, la dispersion telle qu'obtenue ci-dessus peut être ensuite soumise à un traitement thermique à une température comprise entre 80 et 300°C, de préférence entre 90°C et 110°C, et encore plus préférentiellement à la température de reflux du mélange réactionnel.

Les conditions de ce traitement thermique, appelé aussi thermohydrolyse, ne sont pas critiques : il peut être effectué sous pression atmosphérique ou sous pression telle que par exemple la pression de vapeur d'eau saturante correspondant à la température du traitement thermique. On conduit le traitement soit sous atmosphère d'air soit sous atmosphère de gaz inerte, de préférence l'azote.

La durée de ce traitement peut varier dans de larges limites, par exemple entre 2 et 48 heures, de préférence entre 2 et 24 heures.

En fin d'opération, on récupère un précipité solide qui est séparé par les techniques classiques de séparation solide-liquide: filtration, décantation, essorage ou centrifugation.

Le produit ainsi récupéré est ensuite soumis à des lavages, qui sont opérés de préférence avec une solution d'ammoniaque, puis remis en suspension pour constituer la dispersion colloidale destinée à subir l'étape d'autoclavage qui va maintenant être développée.

Conformément au procédé selon l'invention, on soumet ensuite (étape (iii)) la dispersion colloïdale d'hydroxyde cérique à un traitement d'autoclavage, et ceci avant d'effectuer l'opération de calcination.

Cette opération d'autoclavage est effectuée à une température située entre la température de reflux et la température critique du milieu réactionnel. On choisit de préférence une température comprise entre 100°C et 350°C, et encore plus préférentiellement comprise entre 150°C et 350C. La montée en température s'effectue à une vitesse qui n'est pas critique. On atteint la température réactionnelle en chauffant par exemple entre 30 minutres et 4 heures.

On peut conduire cette étape en introduisant la suspension aqueuse d'hydroxyde cérique dans une enceinte clôse (réacteur fermé), la pression nécessaire au traitement ne résultant alors que du seul chauffage du milieu réactionnel (pression autogène).

Dans les conditions de températures données ci-dessus, et en milieu aqueux, on peut préciser, à titre illustratif, que la pression dans le réacteur varie entre une valeur supérieure à 1 Bar ($10^5$ Pa) et 165 Bar ($165.10^5$ Pa), de préférence entre 5 Bar ($5.10^5$ Pa) et 165 Bar ($165.10^5$ Pa).

Il est également possible d'exercer une pression extérieure qui s'ajoute alors à celle consécutive au chauffage.

La durée de l'opération d'autoclavage n'est pas critique. Elle peut varier ainsi entre 30 minutes et 6 heures.

A la fin de celle-ci, on laisse refroidir à l'inertie du système et l'on ramène le système à la pression atmosphérique.

On sépare le produit en suspension dans le milieu liquide selon les techniques classiques de séparation solide-liquide telles que décantation, essorage, filtration et/ou centrifugation par exemple.

Selon une variante particulière de mise en oeuvre de l'étape d'autoclavage décrite ci-dessus, on introduit dans la suspension colloidale d'oxyde cérique à autoclaver une base décomposable. On entend par base décomposable, un composé présentant un $pK_b$ inférieur à 7 et susceptible de se décomposer dans les conditions ultérieures de calcination du procédé selon l'invention. A titre illustratif de ces dernières, on peut citer l'ammoniaque, l'urée, l'acétate d'ammonium, l'hydrogénocarbonate d'ammonium, le carbonate d'ammonium, ou une amine primaire, secondaire, tertiaire comme par exemple la méthylamine, l'éthylamine, la propylamine, la n-butylamine, la sec-butylamine, la n-pentylamine, l'amino-2 pentane, l'amino-2 méthyl-2 butane, l'amino-1 méthyl-3 butane, le diamino-1,2 éthane, le diamino-1,2 propane, le diamino-1,3 propane, le diamino-1,4 butane, le diamino-1,5 pentane, le diamino-1,6 hexane, la diméthylamine, la diéthylamine, la triméthylamine, la triéthylamine ou une amine quaternaire comme, par exemple, un hydroxyde de tétraalkylammonium ayant de préférence des radicaux alkyles contenant de 1 à 4 atomes de carbone et l'on fait

appel plus particulièrement à l'hydroxyde de tétraméthylammonium ou l'hydroxyde de tétraéthylammonium. On peut bien évidemment également mettre en oeuvre un mélange de bases.
A titre de base, on fait appel, de préférence, à une solution d'ammoniaque, d'hydroxyde de tétraalkylammonium ou leurs mélanges.
La concentration de base dans le milieu liquide d'autoclavage n'est pas critique, et elle peut varier dans de larges limites. par exemple entre 0,1 N et 11 N et de préférence entre 1 et 10 N.
On notera que la manière d'obtenir la suspension à autoclaver, et en particulier la manière d'introduire les divers réactifs destinés à la constituer (eau, hydroxyde cérique, base décomposable, éventuellement le sel précurseur d'oxyde de l'élément M lorsque l'on désire l'introduire à cette étape), est tout à fait indifférente.

Conformément à ce mode préféré de réalisation du procédé de synthèse selon l'invention, le ou les sel précurseurs de l'oxyde du ou des éléments dopants M peuvent être introduits à l'une quelconque des étapes (i) à (v) du processus de fabrication donné ci-dessus. Ils peuvent être ainsi introduits à l'étape de formation du sol, à l'étape de thermohydrolyse (lorsqu'elle est mise en oeuvre) ou sur le produit issu de cette étape de thermohydrolyse, avant ou après lavage de ce dernier, ou bien encore à l'étape d'autoclavage ou sur le produit issu de cette étape d'autoclavage.
De préférence, on procède à l'ajout de l'élément dopant M dans la dispersion colloïdale juste avant l'opération d'autoclavage conduite sur cette dernière.
Les quantités de sel du ou des éléments dopants M mises en oeuvre sont telles que l'on obtienne les pourcentages pondéraux désirés dans la composition finale.
Les sels précurseurs d'oxydes utilisables sont ceux déja cités ci-avant dans la description, à savoir notamment les nitrates, les chlorures, les sulfates et les acétates.
Ils peuvent ici être utilisés soit sous forme de solutions aqueuses soit sous forme solide.

Dans la dernière étape du procédé selon l'invention (étape (vi)), la composition issue de l'étape d'autoclavage est ensuite calcinée. Comme souligné dans le cas du premier mode de réalisation du procédé de synthèse des compositions selon l'invention, cette calcination doit être suffisante pour transformer totalement tous les précurseurs (sels et/ou hydroxydes) en oxydes, et elle est aussi choisie en fonction de la température d'utilisation ultérieure réservée à l'oxyde cérique promu en tenant compte du fait que la surface spécifique du produit est d'autant plus faible que la température de calcination est plus élevée. Cette dernière peut ainsi être comprise entre 400 et 1200°C, de préférence entre entre 600 et 1000°C.
L'oxyde cérique dopé obtenu par la voie qui vient d'être développée présente pour avantage, outre le fait d'avoir une capacité de stockage de l'oxygène élevée, de posséder de grandes surfaces spécifiques après des calcinations opérées à la fois à basses températures et à hautes températures.

Les applications des compositions à base d'oxyde cérique selon l'invention, qu'elles aient été préparées par l'une ou l'autre des voies qui ont été développées ci-avant dans la description, sont très nombreuses. Leur capacité de stockage de l'oxygène améliorée les rend particulièrement bien adaptées pour être utilisées dans le domaine de la catalyse, comme catalyseurs et/ou comme supports de catalyseurs. Elles peuvent être employées comme catalyseurs ou supports de catalyseurs pour effectuer diverses réactions telles que, par exemple: la déshydratation, l'hydrosulfuration, l'hydrodénitrification, la désulfuration, l'hydrodésulfuration, la déshydrohalogénation, le réformage, le réformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

Toutefois, une des applications les plus importantes est bien sûr l'utilisation comme élément pour catalyseur pour le traitement des gaz d'échappement des moteurs à combustion interne. Ainsi, dans cette application, l'oxyde cérique promu selon l'invention est mélangé à de l'alumine avant ou après imprégnation par des éléments catalytiquement actifs, tels que des métaux précieux.
Ce mélange est ensuite soit mis en forme pour former des catalyseurs, par exemple sous forme de billes, soit utilisé pour former un revêtement d'un corp réfractaire tel qu'un monolithe en céramique ou métallique, ce revêtement étant connu généralement sous le nom de "wash-coat".

Les exemples qui suivent illustrent l'invention sans toutefois la limiter. Dans ces exemples, les éléments métalliques sont dosés par spectrométrie d'émission plasma.
On commencera par définir le test utilisé pour la détermination des capacités de stockage d'oxygène.

Détermination des capacités de stockage d'oxygène :

Pour apprécier l'avantage apporté par les compositions selon l'invention, on a déterminé leur capacité de stockage de l'oxygène selon le test suivant :
on soumet une masse déterminée de composition (soit 0,1 g lorsque cette composition a été calcinée à 800°C pendant sa synthèse; soit 0,3 g si elle a été calcinée à 1000°C) à un flux de gaz constitué d'hélium sous 2 bar et selon un débit de 10 l/h.

Dans ce gaz porteur sont injectés sous forme de pulse soit de l'oxyde de carbone (CO) à une concentration de 5 %, soit de l'oxygène à une concentration de 2,5 %.
On effectue le test selon la séquence suivante :

- montée en température à 400°C sous hélium
- envoi d'une série de pulses d'oxygène
- envoi d'une série de pulses de CO
- envoi d'une nouvelle série de pulses de $O_2$
- envoi en alternance de pulses de CO et de $O_2$

Pour déterminer et apprécier la capacité de stockage, on mesure alors la consommation moyenne de CO (en ml) par gramme de $CeO_2$ lors de la dernière série constituée par les pulses alternés de CO et $O_2$.

Exemples de référence 1 et 2

Deux oxydes cériques témoins sont préparés de la manière suivante :
une dispersion colloidale aqueuse d'un composé de cérium IV de concentration égale à 60 g/l (exprimée en CeO2) est tout d'abord obtenue en faisant réagir, à température ambiante, (i) 1000 cm3 d'une solution de nitrate cérique contenant 1,24 mole/litre de cérium IV et ayant une acidité libre de 0,332 N avec (ii) 2555 cm3 d'une solution d'ammoniaque 0,3726 N introduite à raison de 1664 cm3/heure dans la solution de nitrate cérique (taux de neutralisation r = 0,5).
Cette dispersion est ensuite soumise à un traitement thermique à 100°C pendant 4 heures (thermohydrolyse).
On récupère ainsi par filtration un précipité qui est ensuite lavé par une solution d'ammoniaque.
Le produit lavé est remis en suspension dans 1 litre d'eau, et la suspension résultante est placée dans un autoclave de deux litres. L'ensemble est alors porté à 200°C, la pression autogène engendrée étant alors d'environ 16 bar ($16.10^5$ Pa), ces conditions étant maintenues pendant 1 heure.
A la fin de ce traitement, on filtre le precipité sur Buchner.
On soumet ensuite deux fractions de produit récupéré à une opération de calcination, respectivement dans les conditions suivantes : 6 heures à 800°C ou 6 heures à 1000°C. Les valeurs de capacité de stockage d'oxygène et de surface spécifique des oxydes cériques obtenus sont reportées dans le tableau I ci-dessous :

TABLEAU I

| EXEMPLE | T° DE CALCINATION (°C) | ADDITIF (M) | TENEUR EN % ATOMIQUE (M/Ce) | CONSOMMATION ALTERNEE EN ml CO/g $CeO_2$ | SURFACE SPECIFIQUE ($m^2/g$) |
|---|---|---|---|---|---|
| 1 (Témoin) | 800 | --- | --- | 3,0 | 45 |
| 2 (Témoin) | 1000 | --- | --- | 1,1 | 16 |

Exemples 3 à 16

Ces exemples illustrent l'invention dans le cadre d'un dopage par une voie imprégnation.

Un oxyde cérique de surface spécifique de 240 $m^2/g$ est préparé en suivant rigoureusement le mode opératoire de l'exemple 1, à la seule différence que l'étape finale de calcination est conduite à 400°C pendant 6 heures. Le volume poreux de l'oxyde obtenu est de 0,29 $cm^3/g$.
Cet oxyde cérique est ensuite imprégné par des solutions de nitrates de divers éléments dopants M, et ceci avec les quantités nécessaires pour obtenir la teneur désirée dans la composition finale, après calcination. Dans cette série d'essais, la teneur a été fixée à 2,5 % atomique (M/Ce). Cette imprégnation est réalisée par la méthode appelée "imprégnation à sec", c'est à dire que le volume de solution d'imprégnation est approximativement égal au volume poreux du solide à imprégner.
Le produit imprégné est ensuite séché sous air à 140°C, puis séparé en deux fractions, chacune de ces fractions étant calcinée dans les conditions données à l'exemple 1.
On réalise également un essai témoin (exemples 12 et 13) dans les mêmes conditions mais en remplaçant la solution d'imprégnation par de l'eau pure.
Les capacités de stockage de l'oxygène et les surfaces spécifiques des compositions ainsi obtenues (oxydes cériques dopés) après calcination à 800°C (6 heures) et 1000°C (6 heures) sont rassemblées dans le tableau II ci-dessous :

TABLEAU II

| EXEMPLE | T° DE CALCINATION (°C) | ADDITIF (M) | TENEUR EN % ATOMIQUE (M/Ce) | CONSOMMATION ALTERNEE EN ml CO/g $CeO_2$ | SURFACE SPECIFIQUE ($m^2/g$) |
|---|---|---|---|---|---|
| 3 | 800 | Fe | 2,5 | 4 | 30 |
| 4 | 1000 | Fe | 2,5 | 1,4 | 7 |
| 5 | 800 | Cr | 2,5 | 3,5 | 12 |
| 6 | 1000 | Cr | 2,5 | 1,2 | 4 |
| 7 | 800 | Sn | 2,5 | nd* | 14 |
| 8 | 1000 | Sn | 2,5 | 1,5 | 10 |
| 9 | 800 | Bi | 2,5 | 4,2 | 29 |
| 10 | 1000 | Bi | 2,5 | 3,3 | 6 |
| 11 | 800 | Ni | 2,5 | 9,6 | 12 |
| 12 | 1000 | Ni | 2,5 | 3,3 | 4 |
| 13 | 800 | Fe + Ni | 1,25 + 1,25 | 7,2 | 31 |
| 14 | 1000 | Fe + Ni | 1,25 + 1,25 | 2,6 | 8 |
| 15 (Témoin) | 800 | --- | --- | 2,9 | 42 |
| 16 (Témoin) | 1000 | --- | --- | 1 | 16 |
| nd* = non déterminée | | | | | |

Exemples 17 à 22

Ces exemples illustrent l'invention dans le cadre d'un dopage opéré lors de la synthèse même d'un oxyde cérique.

On reproduit ainsi l'exemple 1, à cette différence près que, juste avant l'étape d'autoclavage, on introduit dans la suspension à autoclaver des éléments dopants M sous la forme de sels nitrates, et ceci avec les quantités nécessaires pour obtenir la teneur désirée dans la composition finale, après calcination.

Les capacités de stockage d'oxygène et les surfaces spécifiques des compositions ainsi obtenues (oxydes cériques dopés) après calcination à 800°C (6 heures) et à 1000°C (6 heures) sont rassemblées dans le tableau III ci-dessous :

TABLEAU III

| EXEMPLE | T° DE CALCINATION (°C) | ADDITIF (M) | TENEUR EN % ATOMIQUE (M/Ce) | CONSOMMATION ALTERNEE EN ml CO/g $CeO_2$ | SURFACE SPECIFIQUE ($m^2/g$) |
|---|---|---|---|---|---|
| 17 | 800 | Fe | 2,2 | 4,7 | 31 |
| 18 | 1000 | Fe | 2,2 | 1,8 | 4,8 |
| 19 | 800 | Fe | 9,3 | 4,3 | 35 |
| 20 | 1000 | Fe | 9,3 | 2,2 | 8 |
| 21 | 800 | Bi | 2,1 | 4,9 | 40 |
| 22 | 1000 | Bi | 2,1 | 3,1 | 5,6 |

## Revendications

1. Composition à base d'oxyde cérique présentant une capacité de stockage d'oxygène améliorée, caractérisée par le fait qu'elle contient de l'oxyde cérique et, à titre d'additif, un oxyde de bismuth, le bismuth étant présent en une quantité efficace pour obtenir une amélioration de la capacité de stockage d'oxygène.

2. Composition selon la revendication 1, caractérisée en ce que l'oxyde de bismuth forme avec l'oxyde cérique une solution solide.

3. Composition à base d'oxyde cérique présentant une capacité de stockage d'oxygène améliorée, caractérisée par le fait qu'elle contient de l'oxyde cérique et, à titre d'additif, au moins un oxyde d'un autre élément métallique M choisi dans le groupe constitué par le fer, le nickel, l'étain et le chrome ou un de leurs mélanges, l'oxyde de l'élément M formant avec l'oxyde cérique une solution solide et étant présent en une quantité efficace pour obtenir une amélioration de la capacité de stockage d'oxygène.

4. Composition selon la revendication 3, caractérisée en ce que l'élément M est choisi, seul ou en mélange, parmi le fer et le nickel.

5. Composition selon l'une des revendications précédentes, caractérisée en ce que le rapport atomique entre l'élément bismuth ou M et le cérium est compris entre 1 et 50 %.

6. Composition selon la revendication 5, caractérisée en ce que ledit rapport est compris entre 1 et 20%.

7. Composition selon la revendication 6, caractérisée en ce que ledit rapport est compris entre 1 et 10%, de préférence entre 1 et 5%.

8. Composition selon l'une des revendications précédentes, caractérisée en ce que son spectre de diffraction aux rayons X correspond à celui d'un produit monophasique du type $CeO_2$.

9. Composition selon l'une des revendications précédentes, caractérisée en ce qu'elle présente une surface spécifique d'au moins 10 m2/g après calcination à 800°C.

10. Procédé de préparation d'une composition telle que définie à la revendication 1, caractérisé en ce qu'il consiste à tout d'abord préparer un mélange intime entre (i) un oxyde cérique ou un hydroxyde cérique et (ii) au moins un additif constitué par un hydroxyde ou un sel, décomposable thermiquement en oxyde, de l'élément bismuth, puis à calciner ce mélange de manière à obtenir une composition finale à base d'oxydes.

11. Procédé de préparation d'une composition telle que définie à l'une quelconque des revendications 2 à 9, caractérisé en ce qu'il consiste à tout d'abord préparer un mélange intime entre (i) un oxyde cérique ou un hydroxyde cérique et (ii) au moins un additif constitué par un hydroxyde ou un sel, décomposable thermiquement en oxyde, de l'élément métallique bismuth ou M, puis à calciner ce mélange de manière à obtenir une composition finale à base d'oxydes dans laquelle l'élément bismuth ou M forme avec l'oxyde cérique une solution solide.

12. Procédé selon la revendication 10 ou 11, caractérisé en ce que ledit sel thermiquement décomposable en oxyde est choisi, seul ou en mélange, parmi les nitrates, les chlorures, les sulfates et les acétates.

13. Procédé selon l'une des revendications 10 à 12, caractérisé en ce qu'il consiste à imprégner un oxyde cérique avec une solution d'un sel soluble de l'élément métallique bismuth ou M, puis à calciner ledit oxyde de cérium imprégné après éventuellement un séchage.

14. Procédé selon l'une des revendications 11 à 13, caractérisé en ce que ladite imprégnation est une imprégnation à sec.

15. Procédé selon l'une des revendications 10 à 12, caractérisé en ce que, d'une part, il comprend les étapes suivantes :

   (i) on prépare une dispersion colloïdale d'un composé de cérium IV en faisant réagir une solution aqueuse d'un sel de cérium IV et une base de telle sorte que l'on obtienne un taux de neutralisation supérieur strictement à 0 et inférieur strictement à 4,

(ii) on soumet éventuellement ladite dispersion colloïdale à un traitement thermique,

(iii) on chauffe, éventuellement en présence d'une base décomposable thermiquement, ladite dispersion dans une enceinte clôse jusqu'à une température et une pression inférieures respectivement à la température critique et à la pression critique du milieu réactionnel,

(iv) on refroidit le milieu réactionnel et on le ramène à la pression atmosphérique,

(v) on récupère le précipité d'hydroxyde cérique ainsi formé,

(vi) puis on le calcine pour le transformer en oxyde cérique,

et en ce que, d'autre part, l'on ajoute à l'une quelconque des étapes (i) à (v) ci-dessus au moins un sel de l'élément métallique bismuth ou M.

**16.** Procédé selon la revendication 15, caractérisé en ce que la solution aqueuse d'un sel de cérium IV utilisée à l'étape (i) est une solution aqueuse de nitrate cérique ou une solution aqueuse de nitrate céri-ammoniacal.

**17.** Procédé selon l'une des revendications 15 ou 16, caractérisé en ce que l'étape facultative (ii) est conduite à une température comprise entre 80 et 300°C, de préférence entre 90 et 110°C.

**18.** Procédé selon l'une des revendications 15 à 17, caractérisé en ce que le précipité obtenu à l'issue de l'étape facultative (ii) est ensuite lavé à l'ammoniaque.

**19.** Procédé selon l'une des revendications 15 à 18, caractérisé en ce que le traitement de l'étape (iii) est conduit à une température comprise entre 100 et 350°C, de préférence comprise entre 150 et 350°C.

**20.** Procédé selon la revendication 19, caractérisé en ce que ledit traitement est conduit à une pression comprise entre 5 Bar ($5.10^5$ Pa) et 165 Bar ($165.10^5$ Pa).

**21.** Procédé selon l'une des revendications 15 à 20, caractérisé en ce que la base décomposable éventuellement mise en oeuvre à l'étape (iii) est choisie, seule ou en mélange, parmi l'ammoniaque, l'urée, l'hydrogénocarbonate d'ammonium, le carbonate d'ammonium, une amine primaire, secondaire, tertiaire ou quaternaire.

**22.** Procédé selon l'une des revendications 15 à 21, caractérisé en ce que l'ajout du sel de l'élément métallique bismuth ou M se fait à l'étape (iii).

**23.** Procédé selon la revendication 10, caractérisé en ce que l'étape de calcination est conduite à une température comprise entre 400 et 1200°C, de préférence entre 600 et 1000°C.

**24.** Procédé selon la revendication 11, caractérisé en ce que l'étape de calcination est conduite à une température comprise entre 600 et 1200°C, de préférence entre 600 et 1000°C.

**25.** Catalyseur du type comprenant un support poreux et des éléments catalytiquement actifs, caractérisé en ce que le support poreux comprend de l'alumine en mélange avec une composition telle que définie à l'une des revendications 1 à 9 ou obtenue selon le procédé de l'une des revendications 10 à 24.

**26.** Catalyseur de type monolithe comprenant une structure réfractaire revêtue par une couche poreuse sur laquelle sont déposés des éléments catalytiquement actifs, caractérisé en ce que ladite couche poreuse comprend de l'alumine en mélange avec une composition telle que définie à l'une des revendications 1 à 9 ou obtenue selon le procédé de l'une des revendications 10 à 24.

**27.** Utilisation comme catalyseur ou support de catalyseur pour le traitement des gaz d'échappement

- soit d'une composition qui contient de l'oxyde cérique et, à titre d'additif, au moins un oxyde d'un autre élément métallique choisi dans le groupe constitué par le fer, le bismuth et le nickel ou un de leurs mélanges;
- soit d'une composition qui contient de l'oxyde cérique et, à titre d'additif, au moins un oxyde d'un autre élément métallique choisi dans le groupe constitué par le fer, le bismuth, le nickel, l'étain et le chrome ou un de leurs mélanges, l'oxyde de l'élément M formant avec l'oxyde cérique une solution solide;

l'élément métallique étant présent en une quantité efficace pour obtenir une amélioration de la capacité de stockage d'oxygène.

**Claims**

1. A composition based on ceric oxide with improved oxygen storage capacity, characterized in that it contains ceric oxide and, as a additive, bismuth oxide, the bismuth being present in a quantity which is sufficient to improve the oxygen storage capacity.

2. A composition according to claim 1, characterized in that the bismuth oxide forms a solid solution with the ceric oxide.

3. A composition based on ceric oxide with improved oxygen storage capacity, characterized in that it contains ceric oxide and, as a additive, at least one oxide of a further metallic element M selected from the group formed by iron, nickel, tin and chromium or a mixture thereof, the oxide of element M forming a solid solution with the ceric oxide and being present in a quantity which is sufficient to improve the oxygen storage capacity.

4. A composition according to claim 3, characterized in that element M is selected from iron and nickel, used alone or as a mixture.

5. A composition according to any one of the preceding claims, characterized in that the atomic ratio of the element bismuth or M to the cerium is in the range 1% to 50%.

6. A composition according to claim 5, characterized in that said ratio is in the range 1% to 20%.

7. A composition according to claim 6, characterized in that said ratio is in the range 1% to 10%, preferably in the range 1% to 5%.

8. A composition according to any one of the preceding claims, characterized in that its X ray diffraction spectrum corresponds to that of a single-phase $CeO_2$ type product.

9. A composition according to any one of the preceding claims, characterized in that it has a specific surface area of at least 10 $m^2/g$ after calcining at 800°C.

10. A process for the preparation of a composition as defined in claim 1, characterized in that it consists of, firstly, preparing an intimate mixture of (i) a ceric oxide or a ceric hydroxide and (ii) at least one additive constituted by a hydroxide or salt of bismuth which is thermally decomposable to an oxide, then calcining the mixture to obtain a final oxide based composition.

11. A process for the preparation of a composition as defined in any one of claims 2 to 9, characterized in that it consists of, firstly, preparing an intimate mixture of (i) a ceric oxide or a ceric hydroxide and (ii) at least one additive constituted by a hydroxide or a salt of bismuth or a metallic element M which is thermally decomposable to a oxide, then calcining the mixture to obtain a final oxide based composition in which the bismuth or metallic element M forms a solid solution with the ceric oxide.

12. A process according to claim 10 or claim 11, characterized in that said salt which is thermally decomposable to a oxide is selected from nitrates, chlorides, sulphates and acetates, used alone or as a mixture.

13. A process according to any one of claims 10 to 12, characterized in that it consists of impregnating a ceric oxide with a solution of a soluble salt of bismuth or metallic element M, then calcining said impregnated cerium oxide after optional drying.

14. A process according to any one of claims 11 to 13, characterized in that said impregnation is dry impregnation.

15. A process according to any one of claims 10 to 12, characterized in that it comprises the following steps:

    (i) preparing a colloidal dispersion of a cerium IV compound by reacting an aqueous solution of a cerium IV salt and a base to obtain a degree of neutralisation which is between 0 and 4 (limits excluded);
    (ii) optionally, heat treating said colloidal dispersion;

(iii) heating said dispersion, optionally in the presence of a thermally decomposable base, in a sealed vessel to a temperature and pressure which are respectively lower than the critical temperature and critical pressure of the reaction medium;

(iv) cooling the reaction medium and returning it to atmospheric pressure;

(v) recovering the precipitated ceric hydroxide which is thus formed;

(vi) calcining to transform it to ceric hydroxide;

and in that at least one salt of bismuth or metallic element M is added during any one of steps (i) to (v) above.

**16.** A process according to claim 15, characterized in that the aqueous solution of the cerium IV salt used in step (i) is a aqueous solution of ceric nitrate or an aqueous ammonium ceric nitrate solution.

**17.** A process according to claim 15 or claim 16, characterized in that optional step (ii) is carried out at a temperature which is in the range 80°C to 300°C, preferably in the range 90°C to 110°C.

**18.** A process according to any one of claims 15 to 17, characterized in that the precipitate obtained at the end of optional step (ii) is then washed with ammonia.

**19.** A process according to any one of claims 15 to 18, characterized in that the treatment of step (iii) is carried out at a temperature which is in the range 100°C to 350°C, preferably in the range 150°C to 350°C.

**20.** A process according to claim 19, characterized in that said treatment is carried out at a pressure which is in the range 5 bar (5 x $10^5$ Pa) to 165 bar (165 x $10^5$ Pa).

**21.** A process according to any one of claims 15 to 20, characterized in that the decomposable base which is optionally used in step (iii) is selected from ammonia, urea, ammonium bicarbonate, ammonium carbonate, or a primary, secondary, tertiary or quaternary amine, used alone or as a mixture.

**22.** A process according to any one of claims 15 to 21, characterized in that the bismuth or metallic element M is added in step (iii).

**23.** A process according to claim 10, characterized in that the calcining step is carried out at a temperature which is in the range 400°C to 1200°C, preferably in the range 600°C to 1000°C.

**24.** A process according to claim 11, characterized in that the calcining step is carried out at a temperature which is in the range 600°C to 1200°C, preferably in the range 600°C to 1000°C.

**25.** A catalyst comprising a porous support and catalytically active elements, characterized in that the porous support comprises alumina mixed with a composition as defined in any one of claims 1 to 9 or obtained using the process defined in any one of claims 10 to 24.

**26.** A monolithic catalyst comprising a refractory structure coated with a porous layer on which catalytically active elements are deposited, characterized in that said porous layer comprises alumina mixed with a composition as defined in any one of claims 1 to 9 or obtained using the process defined in any one of claims 10 to 24.

**27.** The use, as a catalyst or catalyst support for the treatment of exhaust gases, of:

- either a composition which contains ceric oxide and, as an additive, at least one oxide of another metallic element selected from the group formed by iron, bismuth and nickel or a mixture thereof;
- or a composition which contains ceric oxide and, as an additive, at least one oxide of another metallic element selected from the group formed by iron, bismuth, nickel, tin and chromium or a mixture thereof, the oxide of element M forming a solid solution with the ceric oxide;
  the metallic element being present in a sufficient quantity to improve the oxygen storage capacity.

## Patentansprüche

**1.** Zusammensetzung auf der Basis von Ceroxid mit einer verbesserten Speicherkapazität für Sauerstoff, dadurch gekennzeichnet, daß sie Ceroxid und als Zusatzstoff ein Oxid von Wismut enthält, wobei das Wismut in einer wirksamen Menge vorliegt, um eine Verbesserung der Speicherkapazität für Sauerstoff zu erhalten.

2. Zusammensetzung nach Anspruch 1, dadurch gekennzeichnet, daß das Oxid von Wismut mit dem Ceroxid eine feste Lösung bildet.

3. Zusammensetzung auf der Basis von Ceroxid mit einer verbesserten Speicherkapazität für Sauerstoff, dadurch gekennzeichnet, daß sie Ceroxid und als Zusatzstoff mindestens ein Oxid eines anderen metallischen Elementes M enthält, gewählt aus der durch Eisen, Nickel, Zinn und Chrom oder eine ihrer Mischungen gebildeten Gruppe, wobei das Oxid des Elementes M mit dem Ceroxid eine feste Lösung bildet und in einer wirksamen Menge vorliegt, um eine Verbesserung der Speicherkapazität für Sauerstoff zu erhalten.

4. Zusammensetzung nach Anspruch 3, dadurch gekennzeichnet, daß das Element M, allein oder in Mischung, unter Eisen und Nickel ausgewählt wird.

5. Zusammensetzung nach einem der vorstehenden Ansprüche, dadurch gekennzeichnet, daß das atomare Verhältnis zwischen dem Element Wismut oder M und Cer zwischen 1 % und 50 % liegt.

6. Zusammensetzung nach Anspruch 5, dadurch gekennzeichnet, daß das genannte Verhältnis zwischen 1 % und 20 % liegt.

7. Zusammensetzung nach Anspruch 6, dadurch gekennzeichnet, daß das genannte Verhältnis zwischen 1 % und 10 %, vorzugsweise zwischen 1 % und 5 % liegt.

8. Zusammensetzung nach einem der vorstehenden Ansprüche, dadurch gekennzeichnet, daß ihr Beugungsspektrum für Röntgenstrahlen dem eines monophasischen Produktes vom Typ $CeO_2$ entspricht.

9. Zusammensetzung nach einem der vorstehenden Ansprüche, dadurch gekennzeichnet, daß sie eine spezifische Oberfläche von mindestens 10 $m^2/g$ nach der Kalzinierung bei 800 °C aufweist.

10. Verfahren zur Herstellung einer Zusammensetzung wie in Anspruch 1 definiert, dadurch gekennzeichnet, daß es darin besteht, zuerst eine innige Mischung zwischen (I) einem Ceroxid oder einem Cerhydroxid und (II) mindestens einem Zusatzstoff herzustellen, der aus einem thermisch zum Oxid abbaubaren Hydroxid oder Salz des Elementes Wismut besteht, und anschließend diese Mischung zu kalzinieren, so daß man eine Endzusammensetzung auf der Basis von Oxiden erhält.

11. Verfahren zur Herstellung einer Zusammensetzung wie in irgendeinem der Ansprüche 2 bis 9 definiert, dadurch gekennzeichnet, daß es darin besteht, zuerst eine innige Mischung zwischen (I) einem Ceroxid oder einem Cerhydroxid und (II) mindestens einem Zusatzstoff herzustellen, der aus einem thermisch zum Oxid abbaubaren Hydroxid oder Salz des metallischen Elementes Wismut oder M besteht, und anschließend diese Mischung zu kalzinieren, so daß man eine Endzusammensetzung auf der Basis von Oxiden erhält, in der das Element Wismut oder M mit dem Ceroxid eine feste Lösung bildet.

12. Verfahren nach Anspruch 10 oder 11, dadurch gekennzeichnet, daß das genannte, thermisch zum Oxid abbaubare Salz, allein oder in Mischung, unter den Nitraten, den Chloriden, den Sulfaten und den Acetaten ausgewählt wird.

13. Verfahren nach einem der Ansprüche 10 bis 12, dadurch gekennzeichnet, daß es darin besteht, ein Ceroxid mit einer Lösung eines löslichen Salzes des metallischen Elementes Wismut oder M zu. imprägnieren, und anschließend das genannte, imprägnierte Ceroxid, gegebenenfalls nach einer Trocknung, zu kalzinieren.

14. Verfahren nach einem der Ansprüche 11 bis 13, dadurch gekennzeichnet, daß die genannte Imprägnierung eine Trockenimprägnierung ist.

15. Verfahren nach einem der Ansprüche 10 bis 12, dadurch gekennzeichnet, daß es einerseits die folgenden Stufen umfaßt:

(I) man stellt eine kolloidale Dispersion einer Cer(IV)-Verbindung her, indem man eine wäßrige Lösung eines Cer(IV)-Salzes und eine Base in der Weise zur Reaktion bringt, daß man einen Neutralisationsgrad von genau höher als 0 und genau niedriger als 4 erhält,
(II) man unterzieht die genannte kolloidale Dispersion gegebenenfalls einer thermischen Behandlung,
(III) man erhitzt, gegebenenfalls in Anwesenheit einer thermisch abbaubaren Base, die genannte Dispersion in einem geschlossenen Behälter bis auf eine Temperatur und einen Druck, der jeweils unterhalb der kritischen

Temperatur und dem kritischen Druck der Reaktionsmischung liegt,
(IV) man kühlt die Reaktionsmischung ab und bringt sie wieder auf atmosphärischen Druck,
(V) man sammelt den auf diese Weise gebildeten Niederschlag von Cerhydroxid,
(VI) man kalziniert anschließend den Niederschlag, um ihn in Ceroxid umzuwandeln,

und dadurch, daß man andererseits bei irgendeiner der obigen Stufen (I) bis (V) mindestens ein Salz des metallischen Elementes Wismut oder M hinzufügt.

**16.** Verfahren nach Anspruch 15, dadurch gekennzeichnet, daß die in der Stufe (I) verwendete wäßrige Lösung eines Cer(IV)-Salzes eine wäßrige Lösung von Cernitrat oder eine wäßrige Lösung von ammoniakalischem Cernitrat ist.

**17.** Verfahren nach einem der Ansprüche 15 oder 16, dadurch gekennzeichnet, daß die fakultative Stufe (II) bei einer Temperatur zwischen 80 °C und 300 °C, vorzugsweise zwischen 90 °C und 110 °C durchgeführt wird.

**18.** Verfahren nach einem der Ansprüche 15 bis 17, dadurch gekennzeichnet, daß der am Ende der fakultativen Stufe (II) erhaltene Niederschlag anschließend mit Ammoniak gewaschen wird.

**19.** Verfahren nach einem der Ansprüche 15 bis 18, dadurch gekennzeichnet, daß die Behandlung der Stufe (III) bei einer Temperatur zwischen 100 °C und 350 °C, vorzugsweise zwischen 150 °C und 350 °C durchgeführt wird.

**20.** Verfahren nach Anspruch 19, dadurch gekennzeichnet, daß die genannte Behandlung bei einem Druck zwischen 5 bar ($5.10^5$ Pa) und 165 bar ($165.10^5$ Pa) durchgeführt wird.

**21.** Verfahren nach einem der Ansprüche 15 bis 20, dadurch gekennzeichnet, daß die gegebenenfalls in der Stufe (III) eingesetzte thermisch abbaubare Base, allein oder in Mischung, ausgewählt wird unter Ammoniak, Harnstoff, Ammoniumhydrogencarbonat, Ammoniumcarbonat, einem primären, sekundären, tertiären oder quaternären Amin.

**22.** Verfahren nach einem der Ansprüche 15 bis 21, dadurch gekennzeichnet, daß die Zugabe des Salzes des metallischen Elementes Wismut oder M in der Stufe (III) erfolgt.

**23.** Verfahren nach Anspruch 10, dadurch gekennzeichnet, daß die Stufe der Kalzinierung bei einer Temperatur zwischen 400 °C und 1200 °C, vorzugsweise zwischen 600 °C und 1000 °C durchgeführt wird.

**24.** Verfahren nach Anspruch 11, dadurch gekennzeichnet, daß die Stufe der Kalzinierung bei einer Temperatur zwischen 600 °C und 1200 °C, vorzugsweise zwischen 600 °C und 1000 °C durchgeführt wird.

**25.** Katalysator des Typs, der einen porösen Träger und katalytisch aktive Elemente umfaßt, dadurch gekennzeichnet, daß der poröse Träger Aluminiumoxid in Mischung mit einer wie in den Ansprüchen 1 bis 9 definierten oder nach dem Verfahren gemäß einem der Ansprüche 10 bis 24 erhaltenen Zusammensetzung umfaßt.

**26.** Katalysator vom monolithischen Typ, umfassend eine mit einer porösen Schicht überzogene hitzebeständige Struktur, auf der die katalytisch aktiven Elemente abgelagert sind, dadurch gekennzeichnet, daß die genannte poröse Schicht Aluminiumoxid in Mischung mit einer wie in den Ansprüchen 1 bis 9 definierten oder nach dem Verfahren gemäß einem der Ansprüche 10 bis 24 erhaltenen Zusammensetzung umfaßt.

**27.** Verwendung entweder

- einer Zusammensetzung, die Ceroxid und als Zusatzstoff mindestens ein Oxid von einem anderen metallischen Element enthält, gewählt aus der durch Eisen, Wismut, Nickel oder eine ihrer Mischungen gebildeten Gruppe, oder
- einer Zusammensetzung, die Ceroxid und als Zusatzstoff mindestens ein Oxid von einem anderen metallischen Element enthält,
  gewählt aus der durch Eisen, Wismut, Nickel, Zinn und Chrom oder eine ihrer Mischungen gebildeten Gruppe, wobei das Oxid des Elementes M mit dem Ceroxid eine feste Lösung bildet,
  und wobei das metallische Element in einer wirksamen Menge vorliegt, um eine Verbesserung der Speicherkapazität für Sauerstoff zu erhalten,
  als Katalysator oder Katalysatorträger für die Behandlung von Auspuffgasen.